# EUROPEAN PATENT APPLICATION

(11) **EP 3 339 024 A1**
(43) Date of publication of application: **27.06.2018**
(21) Application number: 16861795.9
(22) Date of filing: 12.05.2016
(51) Int. Cl.: B32B 27/36, B05D 7/04, B05D 7/24, B32B 27/16, B32B 27/18, B32B 27/30, C08J 7/04, C09D 125/06, C09D 129/04, C09D 133/00

(54) **COATED FILM**

(30) Priority: 02.11.2015 JP 2015215374; 02.11.2015 JP 2015215375
(71) Applicant: Mitsubishi Chemical Corporation, Tokyo 100-8251 (JP)
(72) Inventor: KATO, Yuzo, Maibara-shi Shiga 521-0234 (JP); KAWASAKI, Yoichi, Maibara-shi Shiga 521-0234 (JP); KAWASAKI, Taishi, Maibara-shi Shiga 521-0234 (JP)
(74) Representative: Ter Meer Steinmeister & Partner
(86) International application number: PCT/JP2016/064131
(87) International publication number: WO 2017/077726

(57) **Abstract**

According to the present invention, there is provided a coated film that is excellent in not only antistatic properties, but also persistency of the antistatic properties. The present invention relates to a coated film comprising a polyester film and a coating layer formed on at least one surface of the polyester film which is prepared from a coating solution comprising a polystyrenesulfonic acid or a derivative thereof, and a binder resin or a crosslinking agent.

## Description

### TECHNICAL FIELD

The present invention relates to a coated film that is excellent in not only antistatic properties, but also persistency of the antistatic properties.

### BACKGROUND ART

Biaxially oriented polyester films have been extensively used in various applications including not only packaging materials, printing plate-forming materials, display materials, transfer materials, building materials and window-attaching materials, but also membrane switches, antireflective films for flat displays or the like, optical films such as diffusion sheets and prism sheets, transparent touch panels, etc., because they are excellent in transparency, dimensional stability, mechanical properties, heat resistance, electric properties, gas-barrier properties, chemical resistance, etc.

The polyester films have such a feature common to plastic films that they are likely to be electrically charged owing to generation of static electricity thereon. For this reason, the polyester films tend to suffer from problems such as travelling defects or attraction of surrounding dirt or dusts thereonto during processing of the films or in processed film products, as well as problems such as adhesion between a plurality of the films owing to generation of static electricity thereon when formed into optical films, and unevenness of quality of images formed on the films owing to deflection thereof. In order to suppress undesirable electrification of the polyester films, there is known a method of providing a coating layer having an antistatic performance on the films.

To solve the aforementioned problems, in Patent Literatures 1 to 3, there have been proposed the polyester films that respectively comprise a coating layer comprising a cationic antistatic agent, and have good travelling properties for a coater. In particular, the cationic antistatic agent such as typically a quaternary ammonium compound has an excellent antistatic performance.

On the other hand, the cationic antistatic agent tends to be insufficient in compatibility with other components generally constituting the coating layer because these components frequently have anionic properties. As a result, there tends to occur the risk of causing deterioration in antistatic performance owing to falling-off of the antistatic agent from the coating film, contamination of a process line owing to bleed-out of the antistatic agent, and reduction of a pot life and occurrence of poor coating appearance.

### CITATION LIST

### PATENT LITERATURES

Patent Literature 1: Japanese Patent Application Laid-Open (KOKAI) No. 5-1164
Patent Literature 2: Japanese Patent Application Laid-Open (KOKAI) No. 8-143691
Patent Literature 3: Japanese Patent Application Laid-Open (KOKAI) No. 2008-81551

### SUMMARY OF INVENTION

### TECHNICAL PROBLEM

The present invention has been accomplished in view of the above conventional problems. An object of the present invention is to provide a coated film that is excellent in not only antistatic properties, but also persistency of the antistatic properties.

### SOLUTION TO PROBLEM

As a result of the present inventors' earnest study in view of the above technical problems, it has been found that these problems can be solved by forming a coating layer comprising a specific kind of compound. The present invention has been attained on the basis of this finding.

That is, in an aspect of the present invention, there is provided a coated film comprising a polyester film and a coating layer formed on at least one surface of the polyester film which is prepared from a coating solution comprising a polystyrenesulfonic acid or a derivative thereof, and a binder resin or a crosslinking agent.

### ADVANTAGEOUS EFFECTS OF INVENTION

In accordance with the present invention, there can be provided a coated film comprising a coating layer that is excellent in persistency of antistatic properties. Therefore, the present invention has a high industrial value.

### DESCRIPTION OF EMBODIMENTS

The present invention is described in detail below.

The polyester film constituting the coated film of the present invention may have either a single layer structure or a multilayer structure. Unless departing from the scope of the present invention, the polyester film of the present invention may have not only a two or three layer structure but also a four or more multilayer structure, and the layer structure of the polyester film is not particularly limited.

The polyester used for the polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound.

The polyester film may also comprise an ultraviolet absorber in order to improve weathering resistance of the film and prevent deterioration in liquid crystals used therewith and the like. The ultraviolet absorber is not particularly limited as long as it is in the form of a compound capable of absorbing an ultraviolet ray and withstanding heat applied during a process for producing the polyester film.

As the ultraviolet absorber, there are generally known an organic ultraviolet absorber and an inorganic ultraviolet absorber. In view of attaining good transparency of the resulting film, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of good durability thereof. In addition, these ultraviolet absorbers may be used in combination of any two or more thereof.

For the purpose of mainly imparting easy-slipping properties to the polyester layer and preventing occurrence of flaws on the polyester layer in the respective steps, the polyester layer may also comprise particles. The kinds of particles compounded in the polyester layer are not particularly limited as long as they are capable of imparting easy-slipping properties to the resulting film. Specific examples of the particles include inorganic particles such as particles of silica, calcium carbonate, magnesium carbonate, barium carbonate, calcium sulfate, calcium phosphate, magnesium phosphate, kaolin, aluminum oxide and titanium oxide; and organic particles such as particles of acrylic resins, styrene resins, urea resins, phenol resins, epoxy resins and benzoguanamine resins. Further, there may also be used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

Also, the average particle diameter of the particles used in the polyester film is usually not more than 5 µm, preferably in the range of 0.01 to 3 µm. When the average particle diameter of the particles is more than 5 µm, the obtained film tends to have an excessively coarse surface roughness, so that problems or defects tend to occur upon forming various surface functional layers on the film in the subsequent steps.

The content of the particles in the polyester layer is usually less than 5% by weight and preferably in the range of 0.0003 to 3% by weight. When the polyester layer comprises no particles or the content of the particles in the polyester layer is excessively small, the resulting film exhibits a high transparency and therefore might provide a good film, but tends to be insufficient in slip properties. As a result, it would be required to take any measure for enhancing slip properties of the film by incorporating particles into the coating layer formed thereon, etc. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for producing the polyester forming the respective layers. The particles are preferably added to the polyester after completion of the esterification reaction or transesterification reaction.

Meanwhile, the above polyester film may also comprise, in addition to the above particles, conventionally known additives such as an antioxidant, an antistatic agent, a thermal stabilizer, a lubricant, a dye, a pigment, etc., if required.

The thickness of the polyester film is not particularly limited, and the polyester film may have any thickness as long as it can be produced while maintaining a suitable film shape. The thickness of the polyester film is usually in the range of 10 to 350 µm and preferably 25 to 250 µm.

Next, an example of the process of producing the polyester film used in the present invention is more specifically explained, although the present invention is not particularly limited thereto. That is, in the production process, there is preferably used such a method in which the above-mentioned polyester raw material is dried to obtain pellets, and the thus obtained pellets are extruded from a die in the form of a molten sheet using an extruder, and then the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is subjected to heat-setting treatment at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is subjected to heat-setting treatment at a temperature of 170 to 250°C under a tension or under relaxation within 30% to obtain a drawn oriented film. As the drawing machines used in the above simultaneous biaxial drawing method, there may be employed any conventionally known drawing machines such as a screw type drawing machine, a pantograph type drawing machine and a linear drive type drawing machine.

Next, the method of forming the coating layer constituting the coated film according to the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. Among these methods, the in-line coating method is preferably used to form the coating layer.

The in-line coating method is a method in which the coating step is carried out during the process for production of the polyester film, more specifically, such a method in which the coating step is carried out in an optional stage from melt-extrusion of the polyester up to taking-up of the film through the drawing and heat-setting steps. In general, any of the undrawn sheet obtained by melting and rapidly cooling the polyester, the monoaxially drawn film obtained by drawing the undrawn sheet in one of directions thereof, the biaxially oriented film before the heat-setting treatment, or the film after the heat-setting treatment but before the taking-up may be subjected to the coating step. For example, when the film is produced by a sequential biaxial drawing method, the method in which the monoaxially drawn film obtained by drawing the undrawn sheet in a longitudinal direction (length direction) thereof is subjected to the coating step, and then the resulting coated monoaxially drawn film is further drawn in a lateral direction thereof is more excellent, though not particularly limited thereto. The above method has merits in view of production costs because formation of the film and formation of the coating layer can be performed at the same time. In addition, since the drawing is carried out after completion of the coating, it is possible to change the thickness of the coating layer by adjusting a draw ratio of the film, so that the thin-film coating step can be more easily conducted as compared to the film obtained by the off-line coating method. Further, by forming the coating layer on the film before drawing the film, the coating layer and the base material film can be drawn together at the same time, so that adhesion between the base material film and the coating layer can be strengthened. In addition, upon producing the biaxially oriented polyester film, the film is drawn while grasping end portions of the film with clips, etc., and therefore the film can be constrained in both the longitudinal and lateral directions thereof. This enables the polyester film to be exposed to high temperature while keeping a flatness thereof without formation of wrinkles, etc., when subjected to the heat-setting step. Therefore, the temperature used in the heat setting treatment to be conducted after the coating can be increased up to a high temperature which has not been reached in the other conventional methods, so that the film-forming properties of the coating layer can be enhanced, and the adhesion between the coating layer and the base material film can be further strengthened. Furthermore, it is possible to increase a strength of the coating layer and enhance adhesion between the coating layer and various functional layers formed on the coating layer, wet heat resistance, etc.

The coated film of the present invention comprises the polyester film and the coating layer formed on at least one surface of the polyester film. However, as a matter of course, it should be noted that a coated film that is provided on its surface opposed to the surface on which the above coating layer is formed, with the other coating layer or functional layer is also incorporated within the concept of the coated film as defined in the present invention.

Next, the coating layer is described in detail. In the present invention, it is essentially required that the coated film comprises the polyester film and the coating layer formed on at least one surface of the polyester film which is prepared from a coating solution comprising a polystyrenesulfonic acid or a derivative thereof, and a binder resin or a crosslinking agent.

As the polystyrenesulfonic acid or the derivative thereof, there may be mentioned, for example, a polymer comprising a constitutional element represented by the following formula 1 as a repeating unit. In the following formula 1, R is a hydrogen atom, a monovalent metal atom or an ammonium group. The polystyrenesulfonic acid or the derivative thereof may be used in the form of a homopolymer or a copolymer thereof. Further, a copolymer of the polystyrenesulfonic acid or the derivative thereof with a plurality of the other components may also be used. From the standpoint of improving antistatic properties of the resulting film, the polystyrenesulfonic acid or the derivative thereof is preferably used in the form of a homopolymer.

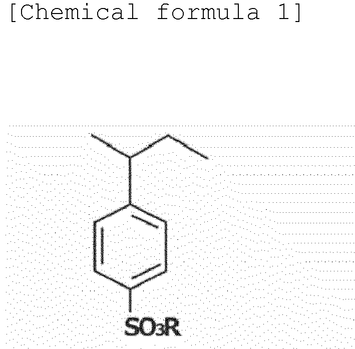

The sulfonic groups of the polystyrenesulfonic acid or the derivative thereof may be kept in a non-neutralized state, or may be neutralized so as to be present in the form of a salt thereof. It is preferred that the sulfonic groups are partially neutralized, and it is more preferred that 5 to 20 mol% of the whole sulfonic groups in the polystyrenesulfonic acid or the derivative thereof are neutralized. When the amount of the sulfonic groups neutralized is less than 5 mol%, the polystyrenesulfonic acid or the derivative thereof tends to be tinted into a red color or a yellow color owing to the heat generated after the coating step, so that there tends to occur such a risk that the resulting film is deteriorated in coating appearance. On the other hand, when the amount of the sulfonic groups neutralized is more than 20 mol%, there tends to occur such a risk that the resulting film is deteriorated in antistatic performance.

Examples of a neutralizing agent used for neutralizing the sulfonic groups of the polystyrenesulfonic acid or the derivative thereof include sodium hydroxide, potassium hydroxide, ammonia, etc.

The molecular weight of the polystyrenesulfonic acid or the derivative thereof in terms of a number-average molecular weight thereof is usually in the range of 10000 to 100000 and preferably 15000 to 50000. When the number-average molecular weight of the polystyrenesulfonic acid or the derivative thereof is less than 10000, the resulting film tends to be insufficient in antistatic properties. When the number-average molecular weight of the polystyrenesulfonic acid or the derivative thereof is more than 100000, the coating solution tends to be increased in viscosity, so that there tends to occur the risk of causing defects upon the coating step.

In the coating layer, for the purpose of improving coating appearance and enhancing strength of the coating layer, a binder resin may be used in combination with the aforementioned components. Specific examples of the binder resin include acrylic resins, polyvinyl resins (such as polyvinyl alcohol, polyvinyl chloride and vinyl chloride-vinyl acetate copolymers), polyurethane resins, polyester resins, polyalkylene glycols, polyalkylene imines, methyl cellulose, hydroxy cellulose, starches, etc. These binder resins may be used alone or in combination of any two or more thereof.

Among these binder resins, from the standpoint of attaining good coating appearance and good durability of the coating layer, acrylic resins or polyvinyl alcohols are preferably used. In addition, since the polystyrenesulfonic acid or the derivative thereof tends to be tinted with a red to yellow color upon heating, the acrylic resins that are capable of suppressing the tinting of the polystyrenesulfonic acid or the derivative thereof are more preferably used.

The acrylic resin is a polymer obtained from a polymerizable monomer including an acrylic monomer or a methacrylic monomer. The polymer may be in the form of either a homopolymer or a copolymer of the polymerizable monomer, and further may be in the form of a copolymer of the aforementioned polymerizable monomer with the other polymerizable monomer than an acrylic monomer or a methacrylic monomer. In addition, the polymer may also be in the form of a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer in a polyester solution or a polyester dispersion (which may also be in the form of a mixture of the polymers). Further, the polymer may also include a polymer obtained by polymerizing the polymerizable monomer in a polyurethane solution or a polyurethane dispersion (which may also be in the form of a mixture of the polymers). Similarly, the polymer may also include a polymer obtained by polymerizing the polymerizable monomer in the other polymer solution or the other polymer dispersion (which may also be in the form of a mixture of the polymers). In addition, in order to further improve adhesion properties of the coating layer, the acrylic resin may also comprise a hydroxyl group or an amino group.

The above polymerizable monomer is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene, and various vinyl esters such as vinyl propionate; various silicon-containing polymerizable monomers such as γ-methacryloxypropyl trimethoxysilane and vinyl trimethoxysilane; various phosphorus-containing vinyl-based monomers; various halogenated vinyl compounds such as vinyl chloride and vinylidene chloride; and various conjugated dienes such as butadiene. Among these polymerizable monomers, preferred are acrylic resins having a glass transition temperature of not higher than 50°C, and more preferred are acrylic resins having a glass transition temperature of not higher than 40°C. Also, from the standpoint of preventing blocking of the resulting film, the lower limit of the glass transition temperature of the polymerizable monomers is preferably -30°C.

The polyvinyl alcohol is a compound having a polyvinyl alcohol moiety. As the polyvinyl alcohol, there may be used, for example, conventionally known polyvinyl alcohols including modified compounds obtained by partially acetalizing or butyralizing polyvinyl alcohol. The polymerization degree of the polyvinyl alcohol is not particularly limited, and is usually not less than 100, and preferably in the range of 300 to 40000. When the polymerization degree of the polyvinyl alcohol is less than 100, the resulting coating layer tends to be deteriorated in water resistance. The saponification degree of the polyvinyl alcohol is also not particularly limited, and there may be practically used a saponified product of polyvinyl acetate having a saponification degree of usually not less than 70 mol%, preferably 70 to 99.9 mol%, more preferably 80 to 97 mol% and especially preferably 86 to 95 mol%.

The polyurethane resin means a polymer compound having a urethane bond in a molecule thereof and may be usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, trimethylolpropane, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene) carbonate.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds having a derivative unit of a lactone compound such as polycaprolactone.

Examples of the polyether polyols include polyethylene glycol, polypropylene glycol, polyethylene/propylene glycol, polytetramethylene ether glycol and polyhexamethylene ether glycol.

Examples of the polyisocyanate compounds constituting the polyurethane resins include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, methylene-bis(4-cyclohexyl isocyanate), dicyclohexylmethane diisocyanate and isopropylidene dicyclohexyl diisocyanate. These polyisocyanate compounds may be used alone or in combination of any two or more thereof. In addition, these polyisocyanate compounds may also be used in the form of a dimer, a trimer such as typically an isocyanuric ring-containing compound, or a higher polymer.

When the polyurethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol, butanediol and pentanediol; aromatic glycols such as xylylene glycol and bishydroxyethoxybenzene; and ester glycols such as neopentyl glycol and neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane, 1,3-bisaminomethyl cyclohexane and isophorone diamine.

The polyurethane resins may be dispersed or dissolved in a solvent as a medium, and is preferably dispersed or dissolved in water as the medium. In order to disperse or dissolve the polyurethane resins in water, there may be used those polyurethane resins of a forcibly emulsifiable type which can be dispersed or dissolved using an emulsifier, or those polyurethane resins of a self-emulsifiable type or a water-soluble type which are obtained by introducing a hydrophilic group into the polyurethane resins. Among these polyurethane resins, in particular, self-emulsifiable type polyurethane resins which are ionomerized by introducing an ionic group into a skeleton of the polyurethane resins are preferred because they are excellent in storage stability of the coating solution as well as in water resistance, transparency and adhesion properties of the resulting coating layer.

Examples of the ionic group to be introduced into the polyurethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the polyurethane resins, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one of the components including the polyol, the polyisocyanate, the chain extender or the like. In particular, there is preferably used the method in which a carboxyl group-containing diol is used to introduce a desired amount of a carboxyl group into the polyurethane resins by suitably adjusting an amount of the diol charged. For example, the diol used in the polymerization for production of the polyurethane resins may be copolymerized with dimethylol propionic acid, dimethylol butanoic acid, bis-(2-hydroxyethyl)propionic acid, bis-(2-hydroxyethyl)butanoic acid, etc. Further, the carboxyl group is preferably in the form of a salt obtained by neutralizing the carboxyl group with ammonia, an amine, an alkali metal, an inorganic alkali, etc. Of these substances used for the neutralization, especially preferred are ammonia, trimethylamine and triethylamine. When using such a polyurethane resin, the carboxyl group thereof from which the neutralizing agent is removed in the drying step of the coating solution may be used as a crosslinking reaction site which can be reacted with other crosslinking agents. As a result, the above-described polyurethane resin is excellent in stability when preserved in the form of a solution before being coated, and the coating layer obtained therefrom can be further improved in durability, water resistance, antiblocking properties, etc.

The polyester resins used for forming the coating layer may be those polyester resins produced, for example, from the following polycarboxylic acids and polyhydroxy compounds as main constituents.

As the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof.

Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, ethylene glycol-modified bisphenol A, diethylene glycol-modified bisphenol A, diethylene glycol, triethylene glycol, polyethylene glycol, polypropylene glycol, polytetramethylene glycol, polytetramethylene oxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned polycarboxylic acids and one or more compounds appropriately selected from the aforementioned polyhydroxy compounds to polycondensation reaction by an ordinary method.

In the coating layer, for the purpose of increasing strength of the coating layer and improving persistency of antistatic properties thereof, a crosslinking agent may also be used in combination with the aforementioned components. Examples of the crosslinking agent include an epoxy compound, a melamine compound, an isocyanate compound, a carbodiimide compound and an oxazoline compound. Among these crosslinking agents, from the standpoint of improving persistency of a resistance value thereof as well as attaining good coating appearance, preferred are an epoxy compound, a melamine compound, a carbodiimide compound and an isocyanate compound, and more preferred are an epoxy compound, a carbodiimide compound and an isocyanate compound. In addition, from the standpoint of attaining long pot life as well as good coating appearance, a water-soluble or self-emulsifiable crosslinking agent is preferably used.

The epoxy compound is a compound having an epoxy group in a molecule thereof. Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane. From the standpoint of improving adhesion properties of the resulting coating layer, among the above epoxy compounds, preferred are polyether-based epoxy compounds. As to the amount of epoxy groups in the epoxy compounds, tri- or higher-functional polyfunctional polyepoxy compounds are more preferably used than bifunctional epoxy compounds.

The melamine compound is a compound having a melamine skeleton therein. Examples of the melamine compound include alkylolated melamine derivatives, partially or completely etherified compounds obtained by reacting the alkylolated melamine derivative with an alcohol, and a mixture of these compounds. Examples of the alcohol suitably used for the above etherification reaction include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by subjecting a urea or the like to co-condensation with a part of melamine. Furthermore, a catalyst may also be used to enhance a reactivity of the melamine compound.

The isocyanate-based compound is an isocyanate, or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds thereof. These isocyanates may be used alone or in combination of any two or more thereof. Of these isocyanates, in view of avoiding yellowing due to irradiation with ultraviolet rays, aliphatic isocyanates and alicyclic isocyanates are more suitably used as compared to aromatic isocyanates.

When the isocyanate-based compound is used in the form of the blocked isocyanate, examples of a blocking agent used for production of the blocked isocyanate include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as methyl isobutanoyl acetate, dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving dispersibility or crosslinking reactivity of the isocyanate-based compounds.

The carbodiimide compound is a compound having a carbodiimide structure. Specifically, the carbodiimide compound is in the form of a compound having one or more carbodiimide structures in a molecule thereof, and the preferred carbodiimide compound is a polycarbodiimide-based compound having two or more carbodiimide structures in a molecule thereof from the standpoint of attaining good durability and good adhesion properties of the resulting coating layer.

The carbodiimide compound may be synthesized by conventionally known techniques. In general, the carbodiimide compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

The content of the carbodiimide groups in the carbodiimide compound as measured in terms of a carbodiimide equivalent of the carbodiimide compound (corresponding to a weight [g] of the carbodiimide compound which is capable of providing 1 mol of the carbodiimide groups) is usually in the range of 100 to 1000, preferably 250 to 800 and more preferably 300 to 700. When the carbodiimide compound is used in the aforementioned range, it is possible to improve durability of the resulting coating film.

Furthermore, in order to improve water solubility or water dispersibility of the polycarbodiimide compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the advantageous effects of the present invention.

The oxazoline compound is a compound having an oxazoline group in a molecule thereof. The especially preferred oxazoline compound is a polymer having an oxazoline group therein which may be in the form of a homopolymer of an addition-polymerizable oxazoline group-containing monomer or a copolymer obtained by polymerizing the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride and vinylidene chloride; and α,β-unsaturated aromatic monomers such as styrene and α-methyl styrene. These monomers may be used alone or in combination of any two or more thereof. From the standpoint of improving durability of the resulting coating film, the content of the oxazoline groups in the oxazoline compound is usually in the range of 0.5 to 10 mmol/g, preferably 1 to 9 mmol/g, more preferably 3 to 8 mmol/g, and especially preferably 4 to 6 mmol/g.

In the case where such a crosslinking component is incorporated into the coating layer, it is possible to use a component capable of simultaneously promoting the crosslinking reaction, for example, such as a crosslinking catalyst, in combination therewith.

The crosslinking agent used in the coating layer may be employed for designing the improvement of a performance of the coating layer by allowing the crosslinking agent to react with itself contained in the coating layer during a drying step or a film-forming step thereof. Therefore, it is estimated that the resulting coating layer comprises the unreacted crosslinking agent, compounds obtained after the crosslinking reaction, or a mixture of these materials.

In order to improve slipping properties and antiblocking properties of the resulting film, particles may also be used in the coating layer as a constituting component thereof in combination with the aforementioned components used in the coating layer.

In the case where the particles are used in combination, the average particle diameter of the particles is usually in the range of not more than 1.0 µm, preferably not more than 0.5 µm and more preferably not more than 0.2 µm from the standpoint of improving transparency of the resulting film. Specific examples of the particles include particles of silica, alumina, kaolin and calcium carbonate, particles of organic compounds, etc.

The content of the polystyrenesulfonic acid or the derivative thereof in the coating solution is usually in the range of 30 to 70% by weight, preferably 35 to 65% by weight and more preferably 40 to 60% by weight based on a total weight of whole non-volatile components in the coating solution. When the content of the polystyrenesulfonic acid or the derivative thereof in the coating solution is less than the above-specified range, the obtained coating layer tends to be insufficient in antistatic properties, whereas when the content of the polystyrenesulfonic acid or the derivative thereof in the coating solution is more than the above-specified range, there tends to occur such a risk that the obtained coating layer is deteriorated in transparency, durability, solvent resistance, etc.

The content of the binder resin in the coating solution is usually in the range of 20 to 75% by weight and preferably 30 to 60% by weight based on a total weight of whole non-volatile components in the coating solution. When the content of the binder resin in the coating solution is less than the above-specified range, the obtained coating layer tends to be insufficient in coating appearance and strength, whereas when the content of the binder resin in the coating solution is more than the above-specified range, the obtained coating layer tends to be insufficient in antistatic properties.

The content of the crosslinking agent in the coating solution is usually in the range of 10 to 75% by weight and preferably 15 to 75% by weight based on a total weight of whole non-volatile components in the coating solution. When the content of the crosslinking agent in the coating solution is less than the above-specified range, the obtained coating layer tends to be insufficient in coating appearance and strength, whereas when the content of the binder resin in the coating solution is more than the above-specified range, the obtained coating layer tends to be insufficient in antistatic properties.

The analysis of the respective components contained in the coating layer may be conducted, for example, by analyzing methods such as TOF-SIMS, ESCA and fluorescent X-ray analysis.

The antistatic properties of the coating layer may be measured in terms of surface resistivity of the coating layer. The smaller surface resistivity of the coating layer indicates that the coating layer is more excellent in antistatic properties thereof. When the surface resistivity of the coating layer is not more than 1 x 10¹² Ω, it is recognized that the coating layer has a good level of antistatic properties without problems, and when the surface resistivity of the coating layer is not more than 1 x 10¹¹ Ω, it is recognized that the coating layer exhibits extremely good antistatic performance.

In the present invention, in the consideration of using the resulting film in the applications requiring good transparency such as displays, etc., it is preferred that the film has high transparency. For example, as one of indices of the transparency of the film, there may be used a haze of the film. The value of the difference in haze between the coated film and the film having no coating layer is usually in the range of not more than 0.5%, preferably not more than 0.3% and more preferably not more than 0.2%. When the haze value of the film is high, the film tends to be deteriorated in visibility in some cases.

When forming the coating layer by the in-line coating method, the laminated polyester film is preferably produced by the method in which an aqueous solution or a water dispersion comprising a series of the above-mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving dispersibility in water, film-forming properties, etc., unless the subject matter of the present invention is adversely affected by addition of the organic solvent. The organic solvents may be used alone, or may be appropriately used in the form of a mixture of any two or more thereof.

The thickness of the coating layer is usually in the range of 0.002 to 1.0 µm, preferably 0.005 to 0.5 µm, more preferably 0.01 to 0.2 µm and especially preferably 0.01 to 0.1 µm. When the thickness of the coating layer is less than the above-specified range, the resulting film tends to be deteriorated in antistatic properties and adhesion properties. When the thickness of the coating layer is more than the above-specified range, the effect of improving the antistatic performance and adhesion properties of the film is already saturated, and on the contrary, defects such as occurrence of blocking rather tend to be caused.

As the method of forming the coating layer, there may be used conventionally known coating methods such as a reverse gravure coating method, a direct gravure coating method, a roll coating method, a die coating method, a bar coating method and a curtain coating method, etc.

The drying and curing conditions used upon forming the coating layer on the polyester film are not particularly limited. For example, in the case where the coating layer is formed by an off-line coating method, the coating layer may be subjected to heat-setting treatment usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting treatment usually at a temperature of 70 to 280°C for 3 to 200 sec.

In addition, irrespective of any of the off-line coating method and the in-line coating method, the above heat-setting may be used in combination with irradiation with an active energy rays such as UV irradiation, if required. The polyester film constituting the laminated polyester film of the present invention may also be previously subjected to surface treatments such as corona treatment and plasma treatment.

### DESCRIPTION OF EMBODIMENTS

### EXAMPLES

The present invention is described in more detail below by Examples. However, these Examples are only illustrative and not intended to limit the present invention, and any changes and modifications are possible unless departing from the scope of the present invention. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi; acceleration voltage: 100 kV), the coating layer was observed to measure particle diameters of 10 particles therein and calculate an average value of the thus measured ten particle diameters as an average particle diameter thereof.

### (3) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi; acceleration voltage: 100 kV).

### (4) Method of measuring haze:

The haze was measured using a haze meter "HM-150" manufactured by Murakami Color Research Laboratory Co., Ltd., according to JIS K 7136.

### (5) Method of evaluating antistatic properties:

Using a high resistance meter "Hiresta-UX MCP-HT800" and a measuring electrode "UR-100" both manufactured by Mitsubishi Chemical Analytech Co., Ltd., after the sample was moisture-controlled in a measuring atmosphere of 23°C and 50% RH for 30 min, the surface resistance value of the sample was measured by applying a voltage of 500 V thereto.

### (6) Method of evaluating antistatic properties after treatment with water:

The film provided thereon with a coating layer was dipped in warm water at 40°C for 24 hr, and then the surface resistance value of the film was measured under the same conditions as used in the aforementioned item (5). The change in surface resistance value of the film between before and after the aforementioned treatment with water was evaluated according to the following ratings.
A: The surface resistance value of the film after the treatment with water is less than 5 times the surface resistance value of the film before the treatment with water.
B: The surface resistance value of the film after the treatment with water is not less than 5 times and less than 10 times the surface resistance value of the film before the treatment with water.
C: The surface resistance value of the film after the treatment with water is not less than 10 times the surface resistance value of the film before the treatment with water.

The polyester raw materials used in Examples and Comparative Examples were as follows.

### <Method of producing polyester (1)>

One hundred parts by weight of dimethyl terephthalate and 55 parts by weight of ethylene glycol as starting materials were charged together with 0.04 part by weight of magnesium acetate tetrahydrate as a catalyst into a reaction vessel, and the reaction therebetween was initiated at 150°C. The reaction temperature was gradually raised while distilling off methanol produced, and allowed to reach 230°C after 3 hr. After the elapse of 4 hr, the transesterification reaction was substantially terminated. The obtained reaction mixture was mixed with 0.02 part by weight of ethyl acid phosphate. Thereafter, the reaction mixture thus obtained was further mixed with 0.04 part by weight of antimony trioxide, followed by subjecting the obtained mixture to polycondensation reaction for 4 hr.
More specifically, the reaction temperature was gradually raised from 230°C until reaching 280°C. On the other hand, the reaction pressure was gradually reduced from normal pressures until finally reaching 0.3 mmHg. After initiation of the reaction, the change in an agitation power of the reaction vessel was monitored, and the reaction was terminated at the time at which the viscosity of the reaction solution in the reaction vessel reached the value corresponding to an intrinsic viscosity of 0.65. Then, the resulting polymer was discharged from the reaction vessel under application of a nitrogen pressure, thereby obtaining a polyester (1) having an intrinsic viscosity of 0.65.

### <Method of producing polyester (1)>

One hundred parts by weight of dimethyl terephthalate and 45 parts by weight of ethylene glycol as starting materials were charged together with 0.06 part by weight of magnesium acetate tetrahydrate as a catalyst into a reaction vessel, and the reaction therebetween was initiated at 150°C. The reaction temperature was gradually raised while distilling off methanol produced, and allowed to reach 230°C after 3 hr. After the elapse of 4 hr, the transesterification reaction was substantially terminated. The obtained reaction mixture was mixed with 0.03 part by weight of ethyl acid phosphate. Thereafter, the reaction mixture thus obtained was further mixed with 0.3 part by weight of silica particles having an average particle diameter of 2.7 µm dispersed in ethylene glycol and 0.03 part by weight of antimony trioxide, followed by subjecting the obtained mixture to polycondensation reaction for 4 hr. More specifically, the reaction temperature was gradually raised from 230°C until reaching 280°C. On the other hand, the reaction pressure was gradually reduced from normal pressures until finally reaching 0.3 mmHg. After initiation of the reaction, the change in an agitation power in the reaction vessel was monitored, and the reaction was terminated at the time at which the viscosity of the reaction solution in the reaction vessel reached the value corresponding to an intrinsic viscosity of 0.65. Then, the resulting polymer was discharged from the reaction vessel under application of a nitrogen pressure, thereby obtaining a polyester (1) having an intrinsic viscosity of 0.65.

The coating composition used herein was as follows.
(A1): Polymer compound having a number-average molecular weight of 20000 which is in the form of a homopolymer comprising a constitutional unit represented by the following formula 2 in which 90% of R in the polymer is constituted of a hydrogen atom, and 10% of R in the polymer is constituted of a sodium ion.
(A2): Polymer compound having a number-average molecular weight of 20000 which is in the form of a homopolymer comprising a constitutional unit represented by the following formula 2 in which 85% of R in the polymer is constituted of a hydrogen atom, and 15% of R in the polymer is constituted of a sodium ion. 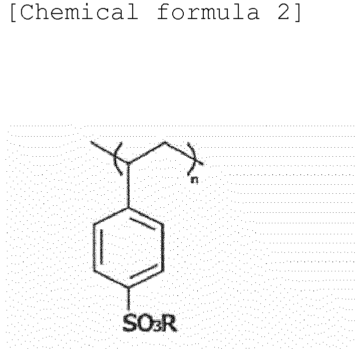
(A3): Polymer compound having a number-average molecular weight of 20000 which was obtained by copolymerizing a constitutional unit represented by the following formula 2-1 and a constitutional unit represented by the following formula 2-2 at a weight ratio of 95/5. 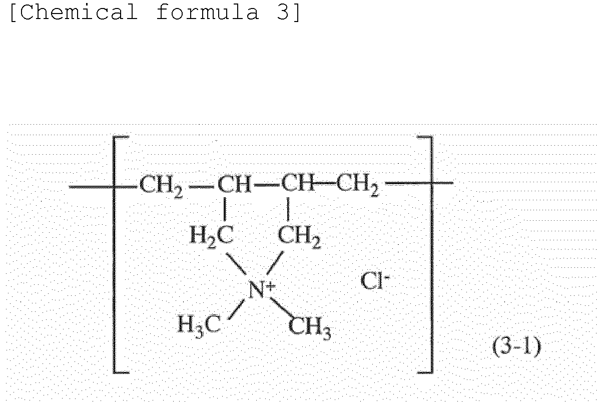 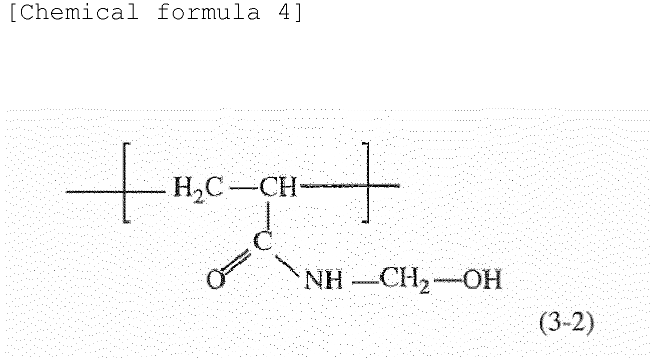
(B1): Water dispersion of an acrylic resin having a glass transition point of 40°C which is obtained by polymerizing the following composition:
   Emulsion polymer (emulsifier: anionic surfactant) produced from ethyl acrylate/n-butyl acrylate/methyl methacrylate/N-methylol acrylamide/acrylic acid = 65/21/10/2/2 (% by weight).
(B2): Water dispersion of an acrylic resin having a glass transition point of 25°C which is obtained by polymerizing the following composition:
   Emulsion polymer (emulsifier: anionic surfactant) produced from ethyl acrylate/methyl acrylate/2-hydroxyethyl methacrylate/N-methylol acrylamide/acrylic acid = 65/28/3/2/2 (% by weight).
(B3): Polyvinyl alcohol having a saponification degree of 88 mol% and a polymerization degree of 500.
(C1): Polyglycerol polyglycidyl ether.
(C2): Hexamethoxymethylolated melamine
(C3): Carbodiimide compound:
   Polycarbodiimide compound "CARBODILITE SV-02" (carbodiimide equivalent: 430) produced by Nisshinbo Chemical Inc.
(C4): Isocyanate compound:
   Blocked polyisocyanate produced by the following method.

That is, 1000 parts of hexamethylene diisocyanate was stirred at 60°C, and 0.1 part of tetramethylammonium caprylate as a catalyst was added thereto. After the elapse of 4 hr, 0.2 part of phosphoric acid was added to the obtained reaction solution to terminate the reaction, thereby obtaining an isocyanurate-type polyisocyanate composition. One hundred parts of the thus obtained isocyanurate-type polyisocyanate composition, 42.3 parts of methoxy polyethylene glycol having a number-average molecular weight of 400, and 29.5 parts of propylene glycol monomethyl ether acetate were charged into a reaction vessel, and the contents of the reaction vessel were allowed to stand at 80°C for 7 hr. Thereafter, while maintaining the resulting reaction solution at a temperature of 60°C, 35.8 parts of methyl isobutanoyl acetate, 32.2 parts of diethyl malonate and 0.88 part of a 28% methanol solution of sodium methoxide were added to the reaction vessel, and the contents of the reaction vessel were allowed to stand for 4 hr. Further, 58.9 parts of n-butanol was added to the reaction vessel, and the resulting reaction solution was maintained at a temperature of 80°C for 2 hr. Thereafter, 0.86 part of 2-ethylhexyl acid phosphate was added to the reaction solution, thereby obtaining the blocked polyisocyanate.

### Example 1:

A blended material obtained by mixing the polyester (1) and the polyester (2) at a weight ratio of 82/18 as a raw material for a layer A, and a raw material for a layer B comprising the polyester (1) solely, were respectively charged into separate extruders, and heated and melted therein at 285°C. The molten raw material for the layer A was divided into two parts, and all of the molten raw materials in the extruders were then co-extruded therefrom into a two-kind/three-layer structure having two outermost layers (surface layers) each constituted of the layer A and an intermediate layer constituted of the layer B (A/B/A) such that the thickness ratio between the constituting layers A/B/A under the aforementioned extrusion conditions was 5/90/5, followed by cooling and solidifying the thus extruded sheet on a mirror-finished chilled drum whose surface was controlled to a temperature of 40 to 50°C while allowing the sheet to adhere to the chilled drum, thereby preparing an undrawn polyethylene terephthalate film. Next, the thus obtained undrawn film was drawn at a draw ratio of 3.7 times in a longitudinal direction thereof while passing between a group of heating rolls heated to a temperature of 85°C, thereby obtaining a monoaxially drawn film. Thereafter, an aqueous coating solution 1 shown in the below-mentioned Table 1 was applied on one surface of the thus obtained monoaxially drawn film. Then, the resulting coated film was introduced into a tenter drawing machine where the film was drawn at 100°C at a draw ratio of 4.0 times in a width direction thereof and then subjected to heat-setting treatment at 230°C. Thereafter, the obtained drawn film was relaxed by 2% in a width direction thereof, thereby obtaining a biaxially oriented polyester film having a thickness of 50 µm which was provided on one surface thereof with a coating layer having a thickness of 0.02 µm (after being dried).

As a result of evaluating the thus obtained polyester film, it was confirmed that the film had a surface resistance value of 5 x 10⁹ Ω, and the change in surface resistance value of the film between before and after the treatment with water was in the range of not less than 5 times and less than 10 times, and further the change in surface resistance value of the film between before and after the treatment with a solvent was in the range of less than 5 times. The properties of the film are shown in the following Table 2.

### Examples 2 to 36:

The same procedure as in Example 1 was conducted except that the coating agent composition was changed to those shown in Table 1, thereby obtaining polyester films. The properties of the thus obtained polyester films were shown in the following Table 2.

### Comparative Examples 1 to 5:

The same procedure as in Example 1 was conducted except that the coating agent composition was changed to those shown in Table 1, thereby obtaining polyester films. As a result of evaluating the resulting polyester films, it was confirmed that some of the thus obtained polyester films were deteriorated in persistency of good surface resistance value, or some others of the polyester films had high haze and were therefore deteriorated in coating appearance. The properties of the obtained polyester films were shown in the following Table 3.

### Comparative Example 6:

The same procedure as in Example 1 was conducted except that no coating layer was formed, thereby obtaining a polyester film. The properties of the thus obtained polyester film were shown in the following Table 3.

**Table 1**

| Coating solutions | Coating agent based on non-volatile components (wt%) | | | | | | | | | |
|---|---|---|---|---|---|---|---|---|---|---|
| | A1 | A2 | A3 | B1 | B2 | B3 | C1 | C2 | C3 | C4 |
| 1 | 30 | 0 | 0 | 70 | 0 | 0 | 0 | 0 | 0 | 0 |
| 2 | 30 | 0 | 0 | 0 | 0 | 70 | 0 | 0 | 0 | 0 |
| 3 | 30 | 0 | 0 | 0 | 0 | 0 | 70 | 0 | 0 | 0 |
| 4 | 30 | 0 | 0 | 0 | 0 | 0 | 0 | 70 | 0 | 0 |
| 5 | 30 | 0 | 0 | 0 | 0 | 0 | 0 | 0 | 70 | 0 |
| 6 | 30 | 0 | 0 | 0 | 0 | 0 | 0 | 0 | 0 | 70 |
| 7 | 50 | 0 | 0 | 50 | 0 | 0 | 0 | 0 | 0 | 0 |
| 8 | 50 | 0 | 0 | 0 | 50 | 0 | 0 | 0 | 0 | 0 |
| 9 | 50 | 0 | 0 | 0 | 0 | 50 | 0 | 0 | 0 | 0 |
| 10 | 50 | 0 | 0 | 0 | 0 | 0 | 50 | 0 | 0 | 0 |
| 11 | 50 | 0 | 0 | 0 | 0 | 0 | 0 | 50 | 0 | 0 |
| 12 | 50 | 0 | 0 | 0 | 0 | 0 | 0 | 0 | 50 | 0 |
| 13 | 50 | 0 | 0 | 0 | 0 | 0 | 0 | 0 | 0 | 50 |
| 14 | 70 | 0 | 0 | 30 | 0 | 0 | 0 | 0 | 0 | 0 |
| 15 | 70 | 0 | 0 | 0 | 0 | 30 | 0 | 0 | 0 | 0 |
| 16 | 70 | 0 | 0 | 0 | 0 | 0 | 30 | 0 | 0 | 0 |
| 17 | 0 | 50 | 0 | 50 | 0 | 0 | 0 | 0 | 0 | 0 |
| 18 | 0 | 50 | 0 | 0 | 0 | 50 | 0 | 0 | 0 | 0 |
| 19 | 0 | 50 | 0 | 0 | 0 | 0 | 50 | 0 | 0 | 0 |
| 20 | 0 | 50 | 0 | 0 | 0 | 0 | 0 | 50 | 0 | 0 |
| 21 | 0 | 50 | 0 | 0 | 0 | 0 | 0 | 0 | 50 | 0 |
| 22 | 0 | 50 | 0 | 0 | 0 | 0 | 0 | 0 | 0 | 50 |
| 23 | 50 | 0 | 0 | 40 | 0 | 0 | 10 | 0 | 0 | 0 |
| 24 | 50 | 0 | 0 | 35 | 0 | 0 | 15 | 0 | 0 | 0 |
| 25 | 50 | 0 | 0 | 30 | 0 | 0 | 20 | 0 | 0 | 0 |
| 26 | 50 | 0 | 0 | 40 | 0 | 0 | 0 | 10 | 0 | 0 |
| 27 | 50 | 0 | 0 | 35 | 0 | 0 | 0 | 15 | 0 | 0 |
| 28 | 50 | 0 | 0 | 30 | 0 | 0 | 0 | 20 | 0 | 0 |
| 29 | 50 | 0 | 0 | 40 | 0 | 0 | 0 | 0 | 10 | 0 |
| 30 | 50 | 0 | 0 | 30 | 0 | 0 | 0 | 0 | 20 | 0 |
| 31 | 50 | 0 | 0 | 40 | 0 | 0 | 0 | 0 | 0 | 10 |
| 32 | 50 | 0 | 0 | 30 | 0 | 0 | 0 | 0 | 0 | 20 |
| 33 | 50 | 0 | 0 | 0 | 0 | 30 | 20 | 0 | 0 | 0 |
| 34 | 50 | 0 | 0 | 0 | 0 | 30 | 0 | 20 | 0 | 0 |
| 35 | 50 | 0 | 0 | 0 | 0 | 30 | 0 | 0 | 20 | 0 |
| 36 | 50 | 0 | 0 | 0 | 0 | 30 | 0 | 0 | 0 | 20 |
| 37 | 100 | 0 | 0 | 0 | 0 | 0 | 0 | 0 | 0 | 0 |
| 38 | 0 | 0 | 0 | 100 | 0 | 0 | 0 | 0 | 0 | 0 |
| 39 | 0 | 0 | 50 | 50 | 0 | 0 | 0 | 0 | 0 | 0 |
| 40 | 0 | 0 | 50 | 0 | 0 | 50 | 0 | 0 | 0 | 0 |
| 41 | 0 | 0 | 50 | 0 | 0 | 0 | 50 | 0 | 0 | 0 |

**Table 2**

| Examples | Coating solutions | Thickness (µm) | Haze | Surface resistance value (Ω/□) | Water resistance of surface resistance value |
|---|---|---|---|---|---|
| Example 1 | 1 | 0.02 | 0.8 | 5E+09 | B |
| Example 2 | 2 | 0.02 | 0.8 | 4E+10 | B |
| Example 3 | 3 | 0.02 | 0.8 | 1E+10 | A |
| Example 4 | 4 | 0.02 | 2.7 | 2E+12 | A |
| Example 5 | 5 | 0.02 | 0.8 | 9E+10 | A |
| Example 6 | 6 | 0.02 | 0.8 | 5E+10 | A |
| Example 7 | 7 | 0.02 | 0.8 | 2E+09 | B |
| Example 8 | 8 | 0.02 | 0.8 | 5E+09 | B |
| Example 9 | 9 | 0.02 | 0.8 | 2E+10 | B |
| Example 10 | 10 | 0.02 | 0.8 | 4E+09 | A |
| Example 11 | 11 | 0.02 | 3.0 | 5E+11 | A |
| Example 12 | 12 | 0.02 | 0.8 | 3E+10 | A |
| Example 13 | 13 | 0.02 | 0.8 | 1E+10 | A |
| Example 14 | 14 | 0.02 | 0.8 | 8E+08 | B |
| Example 15 | 15 | 0.02 | 0.8 | 1E+10 | B |
| Example 16 | 16 | 0.02 | 0.8 | 8E+08 | A |
| Example 17 | 17 | 0.02 | 0.8 | 4E+09 | B |
| Example 18 | 18 | 0.02 | 0.8 | 4E+10 | B |
| Example 19 | 19 | 0.02 | 0.8 | 7E+09 | A |
| Example 20 | 20 | 0.02 | 3.2 | 6E+11 | A |
| Example 21 | 21 | 0.02 | 0.9 | 5E+10 | A |
| Example 22 | 22 | 0.02 | 0.9 | 4E+10 | A |
| Example 23 | 23 | 0.02 | 0.8 | 3E+09 | A |
| Example 24 | 24 | 0.02 | 0.8 | 5E+09 | A |
| Example 25 | 25 | 0.02 | 1.0 | 7E+09 | A |
| Example 26 | 26 | 0.02 | 0.9 | 8E+10 | A |
| Example 27 | 27 | 0.02 | 1.0 | 2E+11 | A |
| Example 28 | 28 | 0.02 | 1.0 | 4E+10 | A |
| Example 29 | 29 | 0.02 | 0.8 | 1E+09 | A |
| Example 30 | 30 | 0.02 | 1.1 | 6E+10 | A |
| Example 31 | 31 | 0.02 | 0.8 | 3E+09 | A |
| Example 32 | 32 | 0.02 | 1.0 | 4E+10 | A |
| Example 33 | 33 | 0.02 | 1.0 | 1E+10 | A |
| Example 34 | 34 | 0.02 | 1.1 | 6E+10 | A |
| Example 35 | 35 | 0.02 | 1.0 | 1E+11 | A |
| Example 36 | 36 | 0.02 | 1.0 | 8E+10 | A |

**Table 3**

| Comparative Examples | Coating solutions | Thickness (µm) | Haze | Surface resistance value (Ω/□) | Water resistance of surface resistance value |
|---|---|---|---|---|---|
| Comparative Example 1 | 37 | 0.02 | 2.2 | 4E+08 | C |
| Comparative Example 2 | 38 | 0.02 | 0.7 | 1E+14 | A |
| Comparative Example 3 | 39 | 0.02 | 1.5 | 2E+09 | C |
| Comparative Example 4 | 40 | 0.02 | 0.8 | 5E+09 | C |
| Comparative Example 5 | 41 | 0.02 | 1.5 | 2E+08 | C |
| Comparative Example 6 | - | - | 0.7 | 1E+14 | A |

### INDUSTRIAL APPLICABILITY

The coated film of the present invention is excellent in not only antistatic properties, but also persistency of the antistatic properties, and therefore can be suitably used in extensive applications without deterioration in antistatic properties thereof upon various processing steps of the film.

## Claims

1. A coated film comprising a polyester film and a coating layer formed on at least one surface of the polyester film which is prepared from a coating solution comprising a polystyrenesulfonic acid or a derivative thereof, and a binder resin or a crosslinking agent.

2. The coated film according to claim 1, wherein the binder resin is an acrylic resin or a polyvinyl alcohol resin.

3. The coated film according to claim 1 or 2, wherein the crosslinking agent is at least one material selected from the group consisting of an epoxy crosslinking agent, a melamine crosslinking agent, an isocyanate crosslinking agent and a carbodiimide crosslinking agent.
